# DEMANDE DE BREVET EUROPEEN

(11) **EP 0 577 459 A1**
(43) Date de publication de la demande: **05.01.1994**
(21) Numéro de dépôt: 93401544.7
(22) Date de dépôt: 16.06.1993
(51) Int. Cl.: H01R 31/08, H01R 9/26, H02B 1/20

(54) **Barrette de connexion électrique de bornes**

(30) Priorité: 03.07.1992 FR 9208343
(71) Demandeur: AEG SCHNEIDER AUTOMATION, F-75016 Paris (FR)
(72) Inventeur: Laudereau,Guy, F-94110 Arcueil (FR)
(74) Mandataire: Carias, Alain

(57) **Abrégé**

La présente invention se rapporte à une barrette de connexion électrique de bornes, constituée d'une bande conductrice découpée (2) ayant la forme d'un peigne dont les dents constituent des cosses (26) servant au pontage des bornes, cette bande (2) étant enrobée dans une enveloppe en matière plastique isolante (3), laissant à nu les extrémités des cosses de connexion (26), caractérisée par le fait que cette bande conductrice métallique (2) forme une pluralité de segments (21, 22, 23, 24, 25) qui sont réunis, latéralement, à l'aide de cosses (26) qui constituent des pontages entre les dits segments.

## Description

La présente invention se rapporte à une barrette de connexion électrique de bornes, constituée par une bande conductrice découpée ayant la forme d'un peigne dont les dents constituent des cosses servant au pontage des bornes, cette bande conductrice étant enrobée dans une enveloppe en matière plastique isolante laissant à nu les extrémités des cosses de connexion.

On utilise des barrettes appelées barrettes omnibus servant à la connexion ou au pontage électrique de bornes d'appareils électriques. Une barrette de connexion de ce type a la forme d'un peigne métallique dont les dents constituent les cosses de connexion aux bornes du ou des appareils. Le brevet FR 2.190.319 décrit par exemple une barrette du type précédent sur laquelle est prévu un enrobage isolant.

La présente invention a pour but de fournir une barrette de connexion en forme de peigne qui peut être facilement sectionnée. L'opération de sectionnement peut être effectuée sans outil et sans toucher la partie métallique, donc de manière très sûre. Après sectionnement, les parties sectionnées restent isolées sur leurs extrémités sectionnées.

Conformément à l'invention, la barrette est caractérisée par le fait que la bande conductrice métallique forme une pluralité de segments qui sont réunis, latéralement, à l'aide de cosses qui constituent des pontages entre lesdits segments.

Selon une caractéristique, les segments sont séparés par des fentes ou échancrures s'étendant perpendiculairement à la direction longitudinale de la barrette.

Selon une autre caractéristique, les segments ont une forme en W ou en U.

L'invention va maintenant être décrite avec plus de détail en se référant à un mode de réalisation donné à titre d'exemple et illustré par les dessins annexés sur lesquels :

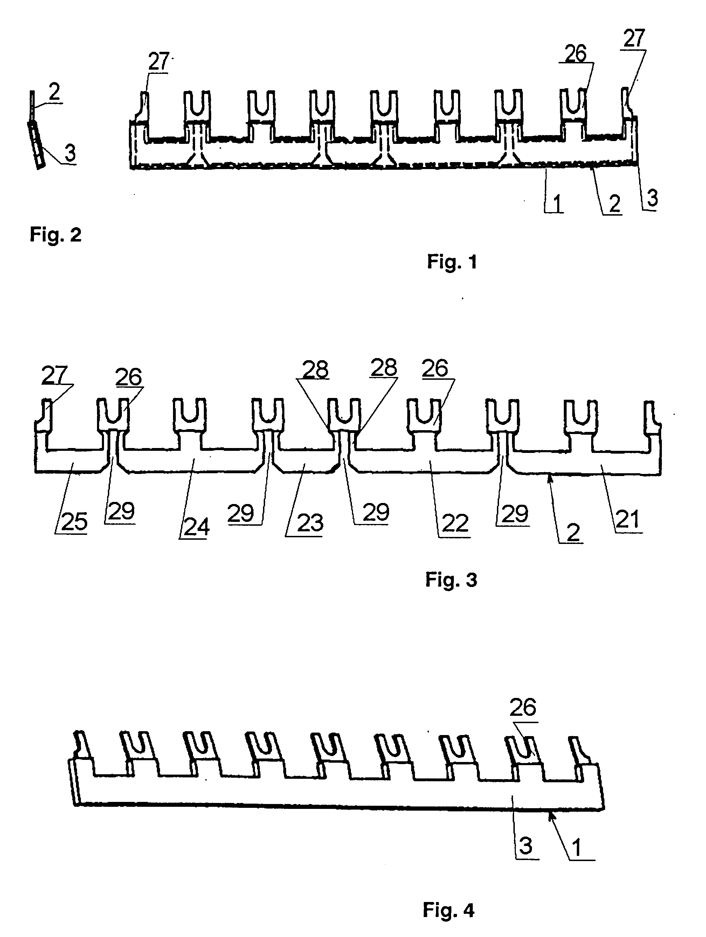

- la figure 1 est une vue en élevation de la barrette de connexion selon l'invention ;
- la figure 2 est une vue de gauche de la figure 1;
- la figure 3 représente la bande métallique découpée de la barrette de connexion;
- la figure 4 est une vue en perspective de l'ensemble de la barrette de connexion.

En se référant aux dessins, la barrette de connexion repérée 1, comprend une bande découpée 2 réalisée dans un métal conducteur de l'électricité et présentant une forme générale de peigne dont les dents 26 constituent des cosses de connexion à des bornes d'un appareil ou d'appareils non représentés.

Dans le mode de réalisation représenté, les cosses 26 sont ouvertes. Ces cosses sont engagées dans les bornes du ou des appareils et sont serrées sous les vis des bornes. En variante, les cosses pourraient être fermées.

La bande conductrice métallique 2 peut être facilement obtenue par estampage d'une plaque métallique.

Cette bande conductrice métallique 2 forme une pluralité de segments 21, 22, 23, 24, 25 qui sont réunis sur un côté, latéralement, à l'aide de cosses 26 constituant des pontages entre ces segments. Les segments sont séparés par des fentes ou échancrures 29 s'étendant perpendiculairement à la direction longitudinale de la barrette. Chaque segment est formé par une lamelle longitudinale se raccordant à ses extrémités à des cosses 26 par des languettes 28. Les cosses d'extrémité 27 sont des demi-cosses ne s'engageant que d'un côté des vis de raccordement. Chaque fente ou échancrure 29 est centrée sur l'axe de symétrie de la cosse de pontage 26 de deux segments.

Certains segments repérés 21, 22, 24 ont une forme en W. D'autres segments repérés 23, 25 ont une forme en U.

De préférence, les cosses 26 sont situées dans un plan formant un dièdre avec le plan des segments , le pli se situant à la base des cosses. Cette disposition favorise le montage des barrettes.

La bande conductrice métallique 2 est enrobée par un enveloppe 3 de matière plastique isolante qui recouvre les segments 21 à 25 en laissant à nu les cosses 28. Cet enrobage 3 remplit les échancrures 29.

La barrette décrite ci-dessus peut notamment être utilisée comme barrette shunt pour des borniers d'automates programmables.

Il est bien entendu que l'on peut, sans sortir du cadre de l'invention, imaginer des variantes et des perfectionnements de détail et de même envisager l'emploi de moyens équivalents.

Le pas entre les cosses 26 peut varier d'un segment à l'autre.

## Revendications

1. Barrette de connexion électrique de bornes, constituée d'une bande conductrice découpée (2) ayant la forme d'un peigne dont les dents constituent des cosses (26) servant au pontage des bornes, cette bande (2) étant enrobée dans une enveloppe en matière plastique isolante (3), laissant à nu les extrémités des cosses de connexion (26), caractérisée par le fait que cette bande conductrice métallique (2) forme une pluralité de segments (21, 22, 23, 24, 25) qui sont réunis, latéralement, à l'aide de cosses (26) qui constituent des pontages entre les dits segments.

2. Barrette selon la revendication 1, caractérisée par le fait que les segments (21,22,23,24,25) sont séparés par des fentes ou échancrures (29) s'étendant perpendiculairement à la direction longitudinale de la barrette.

3. Barrette selon l'une quelconque des revendications précédentes, caractérisée par le fait qu'au moins certains segments (21,22,24,23,25) ont une forme en W ou en U.

4. Barrette selon l'une quelconque des revendications précédentes, caractérisée par le fait que les échancrures entre segments sont centrées sur les cosses de pontage des segments.

5. Barrette selon l'une quelconque des revendications précédentes, caractérisée par le fait que l'enrobage (3) de matière plastique qui recouvre les segments (21 à 25), en laissant à nu les cosses (28) remplit les échancrures (29) entre les segments.
